# EUROPEAN PATENT APPLICATION

(11) **EP 4 570 579 A2**
(43) Date of publication of application: **18.06.2025**
(21) Application number: 24212438.6
(22) Date of filing: 12.11.2024
(51) Int. Cl.: B60L 53/16, B60L 53/302

(54) **CHARGING CONNECTOR AND CHARGING DEVICE**

(30) Priority: 21.11.2023 CN 202323144581 U
(71) Applicant: Huawei Digital Power Technologies Co., Ltd., Shenzhen, Guangdong 518043 (CN)
(72) Inventor: LI, Pengyun, Shenzhen, 518043 (CN); SHENG, Zhigang, Shenzhen, 518043 (CN); YANG, Yanxing, Shenzhen, 518043 (CN)
(74) Representative: Gill Jennings & Every LLP

(57) **Abstract**

Embodiments of this application provide a charging connector and a charging device including the charging connector, and relate to the field of charging device technologies. The charging connector includes a connector head, a cable duct, a grip, and a cable mounting hole. The connector head is disposed at an end part of the cable duct. The grip is connected to the cable duct, and the grip and the cable duct are enclosed to form holding space. The cable mounting hole communicates with the cable duct, the cable mounting hole is located on a side that is of the grip and that is away from the connector head, and the cable mounting hole is configured for a cable to extend into the cable duct. A distance between the cable mounting hole and the connector head is extended, so that an allowed stripping length of the cable is longer, allowing the cable to be connected in the cable duct. This facilitates assembly of the charging connector and improves production efficiency.

## Description

### TECHNICAL FIELD

This application relates to the field of charging device technologies, and in particular, to a charging connector and a charging device.

### BACKGROUND

A charging device usually includes a charging connector. The charging connector may be plugged into an electric apparatus, for example, an electric vehicle (Electric Vehicle, EV), to charge the electric apparatus.

In a conventional technology, a connector body of the charging connector is connected to a cable. To reduce a size of the connector body, a mounting hole that is on a housing of the connector body and that is configured for the cable to extend into is provided close to a connector head.

However, according to a solution in the conventional technology, a stripping length of the cable is short, and a bending degree of a wire or a pipe in the cable is large. Consequently, assembly of the charging connector is difficult, production efficiency is low, and the cable is prone to be damaged during assembly.

### SUMMARY

This application provides a charging connector and a charging device including the charging connector, to extend a stripping length of a cable. This facilitates assembly of the charging connector and improves production efficiency.

To achieve the foregoing objective, the following technical solutions are used in this application.

According to a first aspect of this application, a charging connector is provided. The charging connector includes a connector head, a cable duct, a grip, and a cable mounting hole. The connector head is disposed at an end part of the cable duct. The grip is connected to the cable duct, and the grip and the cable duct are enclosed to form holding space. The cable mounting hole communicates with the cable duct, the cable mounting hole is located on a side that is of the grip and that is away from the connector head, and the cable mounting hole is configured for a cable to extend into the cable duct.

The connector head of the charging connector may be connected to a to-be-charged electric apparatus (for example, an electric vehicle), and the grip is disposed on the cable duct, so that the cable duct has a structure for holding. In this way, an operator holds the charging connector to operate. Some components inside the charging connector may be disposed in the cable duct. This reduces a possibility that an internal structure of the charging connector is damaged. The cable mounting hole is configured for the cable to extend into the cable duct. A wire in the cable needs to be electrically connected to a terminal at the connector head. To enable the wire inside the cable to extend out, a section of a protective sleeve of the cable needs to be stripped off, so that the wire is connected. A length over which the protective sleeve is stripped off is a stripping length of the cable. When the cable is a liquid cooling cable (a cable inside which a liquid cooling pipe is disposed), the liquid cooling pipe in the cable is connected to a position close to the connector head. To enable the liquid cooling pipe to be normally mounted, the liquid cooling pipe also needs to extend outside the protective sleeve. A length of the liquid cooling pipe extending out of the protective sleeve is related to the stripping length of the cable.

In the solution of this application, the cable mounting hole is located on the side that is of the grip and that is away from the connector head, so that a distance between the cable mounting hole and the connector head is large, space in the cable duct for the cable to extend into is large, and a length of the cable that can extend into the cable duct is long. In this way, an allowed stripping length of the cable is also long, and a longer wire and a longer liquid cooling pipe can extend out of the protective sleeve, allowing the wire to be connected and the liquid cooling pipe to be mounted in the cable duct. This facilitates assembly of the charging connector and improves production efficiency of the charging connector. In addition, the wire and the liquid cooling pipe need to extend out of the protective sleeve for at least a specific length, to ensure a normal connection of the wire and normal mounting of the liquid cooling pipe. In this application, the distance between the cable mounting hole and the connector head is long, so that bending degrees of the wire and the liquid cooling pipe during assembly of the charging connector can be reduced, and a possibility that the wire and the liquid cooling pipe are damaged can be reduced.

In an optional implementation, the cable mounting hole is provided close to the cable duct.

The cable mounting hole is provided close to the cable duct, so that the cable extends into the cable duct. When the operator holds the grip, there is a spacing between the cable that passes through the cable mounting hole and a hand of the operator. This reduces a possibility that the cable interferes with the operator in using the charging connector.

In an optional implementation, the charging connector further includes a mounting cover. The mounting cover is disposed on a side that is of the cable duct and that is away from the connector head. The mounting cover is detachably connected to the cable duct. The cable mounting hole is formed in the mounting cover.

The mounting cover is detachably connected to the cable duct, and the cable mounting hole is provided in the mounting cover. This facilitates mounting of the cable. For example, the cable may be first connected to a structure (for example, a terminal) in the connector head or a structure in the cable duct, and then the mounting cover is mounted on the cable duct. For another example, the cable may be first mounted in the mounting cover, and then the cable and the mounting cover are mounted. In other words, the cable duct and the mounting cover are designed separately, so that assembly of the charging connector is more convenient.

In an optional implementation, a grip channel is formed in the grip. An internal channel of the cable duct communicates with the grip channel. The mounting cover covers the internal channel of the cable duct and the grip channel.

The internal channel of the cable duct communicates with the grip channel, so that internal space of the charging connector is larger. This facilitates mounting of the cable and mounting of a component located inside the charging connector in the charging connector, further improves the production efficiency of the charging connector, and helps maintain and replace the component in the charging connector. The mounting cover may cover the grip channel and the internal channel of the cable duct, to protect the internal structure of the charging connector.

In an optional implementation, the cable duct includes a first part and a second part. The first part is connected to and communicates with the second part. The connector head is disposed at an end part that is of the second part and that is away from the first part. Both the first part and the grip extend in an axis direction of the cable mounting hole. An extension direction of the second part intersects with an extension direction of the first part.

There is an included angle between the extension direction of the first part and the extension direction of the second part, and the extension direction of the first part is parallel to an extension direction of the grip, so that the connector body of the charging connector is bent. When the operator holds the grip, the extension direction of the second part can be close to a horizontal direction, so that the connector body is quickly connected to a specified position (for example, a power socket of the electric apparatus or an interface on a charging pile). In this way, a charging operation is more convenient and user-friendly, and use experience of the operator is improved.

In an optional implementation, the charging connector further includes a cooling structure configured to cool a terminal. The cooling structure is disposed in the cable duct. The cable includes a protective sleeve and a liquid cooling pipe. The liquid cooling pipe is disposed in the protective sleeve. An end part of the liquid cooling pipe extends out of the protective sleeve and is connected to the cooling structure.

The protective sleeve can protect the liquid cooling pipe, and a coolant may be injected into the liquid cooling pipe. The liquid cooling pipe is disposed to cool the cable. This reduces a possibility that normal running of the cable is affected due to an excessively high temperature. The coolant flowing into the cable duct may cool the terminal under the guidance of the liquid cooling pipe and the cooling structure. This ensures that the terminal runs stably, and reduces a failure rate of the charging connector. When the cable is the liquid cooling cable including the liquid cooling pipe, the distance between the cable mounting hole and the connector head is extended, so that the bending degree of the liquid cooling pipe can be reduced, and a bending radius of the liquid cooling pipe does not exceed a limit value. This reduces a possibility that the liquid cooling pipe is damaged.

In an optional implementation, the cable further includes a wire. The wire is disposed in the protective sleeve. A terminal is disposed in the connector head. An end part of the wire extends out of the protective sleeve and is electrically connected to the terminal.

The protective sleeve can protect the wire. This reduces a possibility that the wire is damaged. The protective sleeve extends into the cable duct and is fastened to the cable duct, so that a connection between the cable and the cable duct is more stable. After the section of the protective sleeve of the cable is stripped off, a port is formed at an end part of the remaining protective sleeve. The port is configured for the wire to extend out. In other words, the wire extends from the port into the cable duct. The wire extending out of the protective sleeve is electrically connected to the terminal. The terminal is usually disposed in the connector head. In this application, the distance between the cable mounting hole and the connector head is long, the allowed stripping length of the cable (a length of the stripped protective sleeve) is long, and the wire extending out of the protective sleeve is long, so that the wire is connected in the cable duct. This improves assembly efficiency of the charging connector.

In an optional implementation, the charging connector further includes a light-emitting device and a photovoltaic cell. The light-emitting device is disposed on the cable duct or the connector head. The photovoltaic cell is connected to the cable duct, and at least partially located outside the cable duct. The photovoltaic cell is electrically connected to the light-emitting device through a connection wire.

The photovoltaic cell can perform photoelectric conversion, and convert solar radiation energy into electric energy through photovoltaic effect (photovoltaic effect) of the photovoltaic cell. In this process, photons transfer energy to electrons, so that the electrons move, to form a current. The photovoltaic cell is electrically connected to the light-emitting device through the connection wire, to supply power to the light-emitting device. At least a part of the photovoltaic cell is disposed outside the connector body. In an environment with light, the photovoltaic cell can receive light and run normally. The photovoltaic cell is disposed to supply power to the light-emitting device, and light energy is used, so that the light-emitting device can normally emit light when being used. This saves energy, and no additional power supply needs to be disposed for the light-emitting device.

In an optional implementation, the grip channel is formed in the grip, and at least a part of the connection wire is located inside the grip channel.

At least a part of the connection wire is disposed inside the grip channel, and the connection wire is placed through the grip channel in the grip, so that space in the charging connector is fully utilized. This avoids a waste of internal space of the charging connector, and can also reduce a possibility that the connection wire and the cable interfere with and affect each other.

In an optional implementation, the light-emitting device includes a lamp. The lamp is disposed at an end part that is of the cable duct and that is away from the cable mounting hole, or the lamp is disposed at the connector head.

The lamp is disposed at the end part that is of the cable duct or the connector head and that is away from the cable mounting hole. In a process of connecting the charging connector to a predetermined position, the lamp may play an illumination role, so that the operator connects the charging connector more easily to perform charging at night or at a dark place. In this way, the charging connector in this application is more user-friendly, and user experience is further improved.

In an optional implementation, the light-emitting device includes a light-emitting identification part.

The light-emitting identification part in this application may be a logo (Logo) or a trademark, may be an identification, warning, or prompt pattern, or may be a text for prompting or guidance. The identification part that can emit light is used, so that an identification that needs to be seen by the operator is clearer, to offer displaying, prompting, guidance, or warning.

In an optional implementation, the photovoltaic cell includes a thin-film photovoltaic cell.

Because an outer surface of the cable duct is uneven, to enable the photovoltaic cell to be better connected to the cable duct, the thin-film photovoltaic cell may be disposed. The thin-film photovoltaic cell is flexible, and can be curved or bent based on a shape of the outer surface of the cable duct, so that a degree of fitting between the photovoltaic cell and the outer surface of the cable duct is higher. This facilitates mounting of the photovoltaic cell, and can also make the charging connector more beautiful.

According to a second aspect of this application, another charging connector is further provided. The charging connector includes a first connector body, a second connector body, and a cable. Two ends of the cable are respectively connected to the first connector body and the second connector body. Either of the first connector body and the second connector body includes a connector head, a cable duct, a grip, and a cable mounting hole. The connector head is disposed at an end part of the cable duct. The grip is connected to the cable duct. The cable mounting hole communicates with the cable duct. The cable mounting hole is located on a side that is of the grip and that is away from the connector head. The cable mounting hole is configured for an end part of the cable to extend into the cable duct.

The first connector body and the second connector body are respectively disposed at the two ends of the cable. The first connector body may be a power supply plug, and the second connector body may be an apparatus plug. When an electric apparatus needs to be charged, the apparatus plug may be plugged into the electric apparatus (for example, when an electric vehicle needs to be charged, the apparatus plug may be a vehicle plug). Then, the power supply plug is plugged into a power supply apparatus (for example, a charging pile). The power supply apparatus transmits electricity to the apparatus plug through the power supply plug and the cable, to charge the electric apparatus. The first connector body and the second connector body are respectively disposed at the two ends of the cable, so that the charging connector can be used in an environment in which the charging connector needs to be detachably connected to the power supply apparatus. In addition, the charging connector in the second aspect and the charging connector in the first aspect can resolve a same technical problem and have same technical effect. Details are not described herein again.

According to a third aspect of this application, a charging device is provided. The charging device includes a power module and the foregoing charging connector. The charging connector is electrically connected to the power module.

The power module may supply power to the charging connector, so that the charging connector can charge a to-be-charged electric apparatus. In addition, the charging device provided in this application includes the foregoing charging connector. Therefore, the charging device provided in this application and the charging connector in the foregoing technical solution can resolve a same technical problem, and have same technical effect. Details are not described herein again.

### BRIEF DESCRIPTION OF DRAWINGS

FIG. 1 is a diagram of an overall structure of a charging device according to an embodiment of this application;
FIG. 2 is a diagram of an overall structure of another charging device according to an embodiment of this application;
FIG. 3 is a diagram of a partial structure of a charging connector according to an embodiment of this application;
FIG. 4 is a diagram of an internal structure of a charging connector according to an embodiment of this application;
FIG. 5 is a diagram of a partial structure of a charging connector in a conventional technology according to this application;
FIG. 6 is a diagram of a partial structure of another charging connector according to an embodiment of this application; and
FIG. 7 is a diagram of a partial structure of still another charging connector according to an embodiment of this application.

### Reference numerals:

100: charging device;
110: charging connector;
01: connector body; 011: first connector body; 012: second connector body;
1: connector head; 11: terminal; 12: placement hole;
2: cable duct; 21: connection port; 22: first part; 23: second part; 24: cooling structure;
3: grip; 31: holding space; 32: grip channel;
4: mounting cover; 41: cable mounting hole; 42: mounting wall; 421: first wall body; 422: second wall body; 423: third wall body; 43: strain relief structure; 44: boss;
5: cable; 51: protective sleeve; 511: port; 52: wire; 53: liquid cooling pipe;
6: light-emitting device; 61: lamp; 62: light-emitting identification part; 621: light-emitting part; 622: light transmission housing;
7: photovoltaic cell;
8: connection wire; 81: first connection wire; 82: second connection wire;
120: power module;
130: liquid cooling module;
140: mounting base.

### DESCRIPTION OF EMBODIMENTS

The following describes the technical solutions in embodiments of this application with reference to accompanying drawings in embodiments of this application. It is clear that the described embodiments are merely some rather than all of embodiments of this application.

In this application, unless otherwise expressly specified and limited, orientations or position relationships indicated by terms such as "up", "down", "front", "back", "left", and "right" may include but are not limited to be defined with respect to orientations of components schematically placed in the accompanying drawings. These directional terms may be relative concepts, may be used for relative description and clarification, and may vary correspondingly based on changes of the placement orientations of the components in the accompanying drawings. Such terms cannot be understood as a limitation on this application.

In this application, the terms "first", "second", and the like are merely intended for a purpose of description, and are intended to distinguish between one element and another element, but cannot be understood as an indication or implication of relative importance or an implicit indication of a quantity of indicated technical features. Therefore, a feature limited by "first", "second", or the like may explicitly or implicitly include one or more features.

In this application, unless otherwise expressly specified and limited, "a plurality of means two or more.

In this application, unless otherwise expressly specified and limited, terms "mount", "interconnect", and "connect" should be understood in a broad sense. For example, such terms may indicate a fixed connection, a detachable connection, or an integral connection; may indicate a mechanical connection or an electrical connection; or may indicate a direct interconnection, an indirect interconnection through an intermediate medium, or an internal communication between two elements. A person of ordinary skill in the art may understand specific meanings of the foregoing terms in this utility model based on a specific situation.

In this application, the terms such as "example" or "for example" are used to give an example, an illustration, or a description. Any embodiment or design scheme described as an "example" or "for example" in this application should not be construed as being more preferred or having more advantages than another embodiment or design scheme. Specifically, use of the terms such as "example" or "for example" is intended to present a related concept in a specific manner.

In the accompanying drawings of embodiments of this application, entity structures such as components and assemblies are represented by using guide lines, and hollow structures such as openings, holes, space, and cavities are represented by using guide lines with arrows.

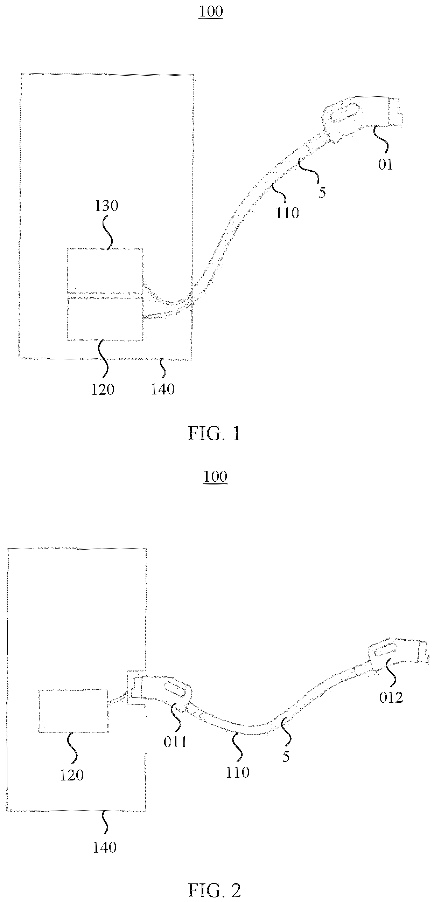

An embodiment of this application provides a charging device 100. Refer to FIG. 1 and FIG. 2. FIG. 1 shows an example of a structure of the charging device 100. FIG. 2 shows an example of a structure of another charging device 100. For example, the charging device 100 may include a charging connector 110, a power module 120, and a mounting base 140. The power module 120 may be disposed in the mounting base 140. The charging connector 110 is electrically connected to the power module 120. In another example, the charging device 100 may not include the mounting base 140, and the power module 120 may be disposed in another apparatus. A position at which the power module 120 is disposed is not specifically limited in this application.

An embodiment of this application further provides a charging connector 110 that may be used in the foregoing charging device 100. Refer to FIG. 1 and FIG. 2. For example, the charging connector 110 includes a connector body 01 (for example, an electrical plug) and a cable 5. The cable 5 is connected to the connector body 01.

Refer to FIG. 1. In an example of the charging device 100, the charging connector 110 includes one connector body 01 and one cable 5. One end of the cable 5 is connected to the connector body 01, and the other end of the cable 5 is electrically connected to the power module 120. The connector body 01 may be connected to (for example, plugged into) an electric apparatus, for example, an electric vehicle, to charge the electric apparatus. In an example in which the cable 5 is a liquid cooling cable, the charging device 100 may further include a liquid cooling module 130. A liquid cooling channel (for example, a liquid cooling pipe) in the cable 5 communicates with the liquid cooling module 130.

Refer to FIG. 2. In an example of the another charging device 100, the charging connector 110 includes a cable 5 and a plurality of connector bodies 01. The plurality of connector bodies 01 include a first connector body 011 and a second connector body 012. The first connector body 011 may be a power supply plug, and the second connector body 012 may be an apparatus plug (for example, a vehicle plug). One end of the cable 5 is connected to the power supply plug (the first connector body 011), and the other end of the cable 5 is connected to the apparatus plug (the second connector body 012). The power supply plug may be electrically connected to the power module 120 (for example, the power supply plug may be plugged into a charging pile), and the apparatus plug may be connected to a to-be-charged electric vehicle. In an example in which the power module 120 is disposed in the mounting base 140, the power supply plug may be plugged into the mounting base 140, to be electrically connected to the power module 120.

To be paired with the connector body 01 of the charging connector 110, a charging interface (for example, a power interface or a charging socket) may be provided on an electric apparatus, so that the connector body 01 is connected to the electric apparatus.

For example, the charging connector 110 may be a direct current (Dltemating Current, DC) charging connector. In another example, the charging connector 110 may alternatively be an alternating current (Airect Current, AC) charging connector (for example, a single-phase alternating current charging connector or a three-phase alternating current charging connector).

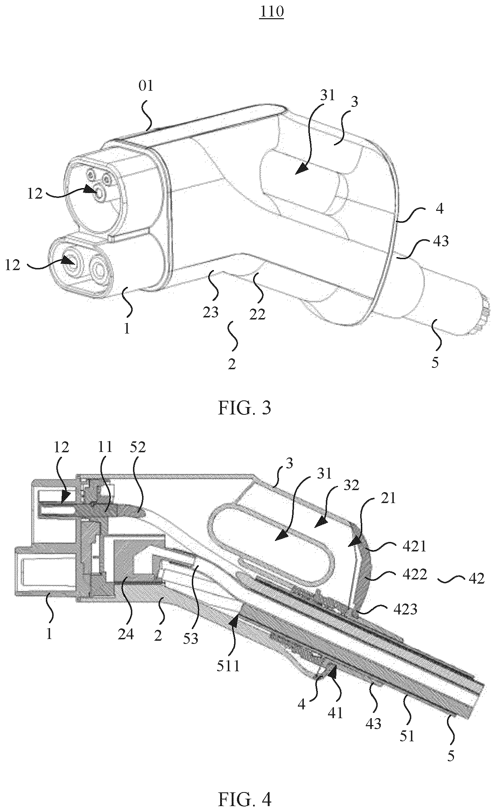

FIG. 3 shows an example of a structure of the charging connector 110. For example, the connector body 01 includes a connector head 1 and a cable duct 2. The connector head 1 is disposed at an end part of the cable duct 2. The connector head 1 is configured to connect to (for example, plug into or clamp with) the electric apparatus or the mounting base 140. To facilitate holding of the charging connector 110, the connector body 01 further includes a grip 3. The grip 3 is connected to the cable duct 2. The grip 3 and the cable duct 2 are enclosed to form holding space 31 for holding. The holding space 31 is configured for a hand of an operator to reach into, so that the operator holds the grip 3 to perform a charging operation.

FIG. 4 shows an example of an internal structure of the charging connector 110. Refer to FIG. 4. A terminal 11 is disposed in the connector head 1. There may be a plurality of connection positions of the terminal 11. For example, the terminal 11 may be connected to the connector head 1, the terminal 11 may be connected to the cable duct 2, or the terminal 11 may be connected to a terminal base in the cable duct 2. A specific connection position of the terminal 11 is not limited in this application.

For example, a plurality of terminals 11 may be disposed. The plurality of terminals 11 may include a plurality of power terminals and a plurality of signal terminals. The power terminal is configured to be paired with a power socket on the electric apparatus, to charge the electric apparatus. The signal terminal is a terminal 11 that can implement a specific function. For example, the signal terminal may be a connection confirmation terminal, a communication terminal, or an auxiliary source terminal.

Refer to FIG. 3 and FIG. 4. To expose the terminal 11 outside the connector head 1, enabling the terminal 11 to be connected to the socket on the electric apparatus, a placement hole 12 may be provided in the connector head 1. The placement hole 12 passes through two sides of the connector head 1. A quantity of placement holes 12 may be the same as a quantity of terminals 11. The terminals 11 are disposed in a one-to-one correspondence with the placement holes 12, and each terminal 11 may be disposed in one placement hole 12.

Refer to FIG. 4. The cable duct 2 may be of a housing structure. A channel is formed in the cable duct 2. The cable duct 2 is configured to accommodate a component disposed in the connector body 01, so that the foregoing component is protected in the cable duct 2. This reduces a possibility that an internal structure of the connector body 01 is damaged. The placement hole 12 may communicate with the channel in the cable duct 2. One end of the terminal 11 may extend into the cable duct 2. To transmit electric energy and signal data, the cable 5 needs to be connected to the terminal 11. The connector body 01 of the charging connector 110 further includes a cable mounting hole 41. The cable 5 passes through the cable mounting hole 41 and extends into the cable duct 2, so that the cable 5 is electrically connected to the terminal 11.

Refer to FIG. 4. It may be understood that, in an example in which two ends of the cable 5 are respectively connected to the connector bodies 01 (the charging connector 110 shown in FIG. 2 is used as an example), one end of the cable 5 extends from a cable mounting hole 41 of the first connector body 011 (refer to FIG. 2) into a cable duct 2 of the first connector body 011, and the other end of the cable 5 extends from a cable mounting hole 41 of the second connector body 012 (refer to FIG. 2) into a cable duct 2 of the second connector body 012.

Refer to FIG. 3 and FIG. 4. For example, the cable 5 may include a protective sleeve 51 and a wire 52. The wire 52 is disposed in the protective sleeve 51. To enable a connection between the cable 5 and the cable duct 2 to be more stable, an end part of the protective sleeve 51 may extend into the cable duct 2 through the cable mounting hole 41. A port 511 is formed at the end part that is of the protective sleeve 51 and that extends into the cable duct 2. The wire 52 extends out from the port 511. In other words, the wire 52 extends from the port 511 into the cable duct 2. An end part of the wire 52 is electrically connected to the terminal 11.

In an example in which the plurality of terminals 11 include the plurality of power terminals and the plurality of signal terminals, a plurality of wires 52 may be disposed, and the protective sleeve 51 wraps outer sides of the plurality of wires 52. The plurality of wires 52 may include a plurality of signal wires and a plurality of power wires. The signal wires are electrically connected to the signal terminals, and the power wires are electrically connected to the power terminals.

Refer to FIG. 4. In an example in which the cable 5 is a liquid cooling cable, the cable 5 further includes a liquid cooling pipe 53. The liquid cooling pipe 53 may be configured for a coolant (for example, water or cooling oil) to flow The liquid cooling pipe 53 is disposed in the protective sleeve 51. In other words, the protective sleeve 51 wraps outer sides of the wire 52 and the liquid cooling pipe 53. The liquid cooling pipe 53 extends out from the port 511, and an end part of the liquid cooling pipe 53 extends into the cable duct 2, and communicates with a cooling structure 24 disposed in the cable duct 2. The cooling structure 24 is disposed close to the connector head 1 or close to the terminal 11. For example, the cooling structure 24 may be a structure configured to cool the terminal 11. In another example, the cooling structure 24 may alternatively be a structure configured for the coolant to stay for a short time and then be discharged from another liquid cooling pipe 53.

The liquid cooling pipe 53 is disposed to cool the cable 5. This reduces a possibility that normal running of the cable 5 is affected due to an excessively high temperature of the cable 5. The coolant flowing into the cable duct 2 may dissipate heat for structures such as the terminal 11 under the guidance of the liquid cooling pipe 53 and the cooling structure 24. This ensures that the terminal 11 can run stably, reduces a failure rate of the charging connector 110, and improves performance of the charging connector 110.

A quantity of liquid cooling pipes 53 may be set based on a cooling requirement. For example, one or more liquid cooling pipes 53 may be disposed. The liquid cooling pipe 53 may be disposed in a filler of the cable 5, or the liquid cooling pipe 53 may pass through a conductor of a cable core of the cable 5. A quantity of liquid cooling pipes 53 and a position at which the liquid cooling pipe 53 is disposed are not specifically limited in this application.

Refer to FIG. 4. The wire 52 needs to extend out of the protective sleeve 51 to be connected to the terminal 11. Similarly, in the example in which the cable 5 is the liquid cooling cable, the liquid cooling pipe 53 also needs to extend out of the protective sleeve 51. To enable the wire 52 and the liquid cooling pipe 53 to be mounted smoothly, a section of the protective sleeve 51 of the cable 5 needs to be stripped off, so that the wire 52 and the liquid cooling pipe 53 extend out of the protective sleeve 51. A length of the stripped protective sleeve 51 is a stripping length of the cable 5. It may be understood that, after the section of the protective sleeve 51 is stripped off, the port 511 is formed at an end part of the remaining protective sleeve 51. When the cable 5 is mounted, the wire 52 and the liquid cooling pipe 53 inside the protective sleeve 51 extend out from the port 511, the wire 52 is connected to the terminal 11, and the liquid cooling pipe 53 is connected to the cooling structure 24.

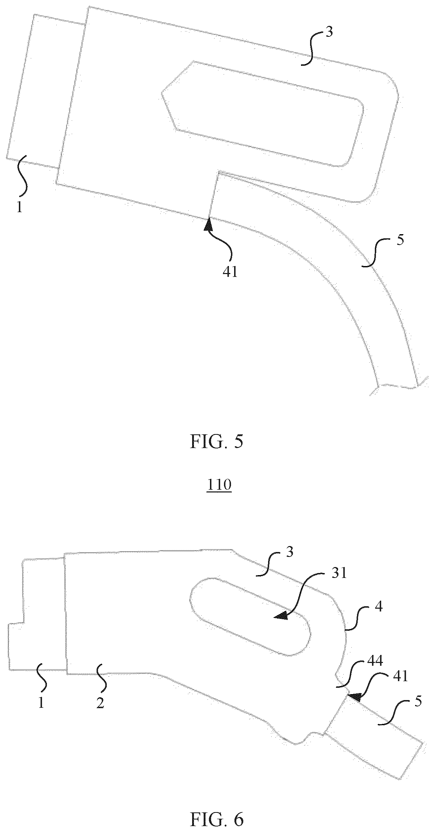

FIG. 5 shows an example of a structure of a charging connector 110 in a conventional technology. Refer to FIG. 5. In the conventional technology, the cable mounting hole 41 is provided close to the connector head 1. In this case, a distance over which the cable 5 extends into the cable duct 2 is reduced, and the stripping length of the cable 5 is reduced. A length of the wire 52 (refer to FIG. 4) extending out of the port 511 is also reduced. It is inconvenient for the wire 52 to be connected to the terminal 11, and it is difficult to mount the cable 5. This affects production efficiency.

Refer to FIG. 4. In addition, in the example in which the cable 5 is the liquid cooling cable, the cooling structure 24 is disposed close to the connector head 1, and the liquid cooling pipe 53 also needs to extend out of the port 511 for a sufficient length, to be smoothly connected to the cooling structure 24. Refer to FIG. 5. However, according to a solution in the conventional technology, the cable mounting hole 41 is provided close to the connector head 1. In this case, the cable mounting hole 41 is close to the cooling structure 24, and an extended liquid cooling pipe 53 needs to be greatly bent (a bending degree may be greater than a bending radius of five times), to be connected to the cooling structure 24. This causes a damage to the liquid cooling pipe 53 during mounting and affects flow of the coolant in the liquid cooling pipe 53.

Refer to FIG. 3 and FIG. 4. To resolve a problem in the conventional technology, according to the charging connector 110 provided in this application, the cable mounting hole 41 is located on a side that is of the grip 3 and that is away from the connector head 1. For example, the charging connector 110 includes a mounting wall 42. The mounting wall 42 is located on the side that is of the grip 3 and that is away from the connector head 1, and the cable mounting hole 41 is provided on the mounting wall 42. The grip 3 is a part held by a hand.

The cable mounting hole 41 provided on the side that is of the grip 3 and that is away from the connector head 1, so that a distance between the cable mounting hole 41 and the connector head 1 can be extended, space in the cable duct 2 for the cable 5 to extend into is larger, and a length of the cable 5 that can extend into the cable duct 2 is longer. In this way, an allowed stripping length of the cable 5 is also longer. A longer length of the stripped protective sleeve 51 indicates that the port 511 of the protective sleeve 51 is closer to the cable mounting hole 41, and indicates longer lengths of the wire 52 and the liquid cooling pipe 53 extending out of the protective sleeve 51. This helps connect the wire 52 and mount the liquid cooling pipe 53, facilitates assembly of the charging connector 110, and improves production efficiency.

In addition, the wire 52 and the liquid cooling pipe 53 need to extend out of the protective sleeve 51 for at least a specific length, so that the wire 52 and the liquid cooling pipe 53 can be normally mounted. The distance between the cable mounting hole 41 and the connector head 1 is long, so that bending degrees of the wire 52 and the liquid cooling pipe 53 during assembly of the charging connector 110 can be reduced, and a possibility that the wire 52 and the liquid cooling pipe 53 are damaged during mounting can be reduced.

Refer to FIG. 4. The mounting wall 42 may include a first wall body 421, a second wall body 422, and a third wall body 423. The second wall body 422 is located between the first wall body 421 and the third wall body 423. Two sides of the second wall body 422 are respectively connected to the first wall body 421 and the third wall body 423. The first wall body 421 is opposite to the grip 3. The second wall body 422 is opposite to the holding space 31. The third wall body 423 is opposite to the cable duct 2. It may be understood that the cable duct 2, the holding space 31, and the grip 3 are sequentially arranged in a preset direction. Correspondingly, the third wall body 423, the second wall body 422, and the first wall body 421 are also sequentially arranged in the preset direction. The first wall body 421, the second wall body 422, and the third wall body 423 are all located on the side that is of the grip 3 and that is away from the connector head 1.

In this application, there are a plurality of cases of a position of the cable mounting hole 41 on the mounting wall 42. Refer to FIG. 4. In an embodiment, the cable mounting hole 41 may be provided close to the cable duct 2. For example, the cable mounting hole 41 is provided on the third wall body 423, the cable mounting hole 41 is opposite to an internal channel of the cable duct 2, and the cable 5 passes through the cable mounting hole 41 and extends into the cable duct 2.

In another embodiment, the cable mounting hole 41 may be provided on the first wall body 421, and the cable 5 passes through the cable mounting hole 41 and extends into the grip 3.

In another embodiment, the cable mounting hole 41 may be provided on the second wall body 422, and the cable 5 passes through the cable mounting hole 41 and extends into the cable duct 2 or the grip 3.

In another embodiment, the mounting wall 42 may be disposed only opposite to the cable duct 2. In this embodiment, the mounting wall 42 does not extend in a direction of the grip 3.

For a structure of the mounting wall 42, refer to FIG. 3 and FIG. 4. In an example, the connector body 01 of the charging connector 110 may further include a mounting cover 4. The mounting cover 4 is located on a side that is of the cable duct 2 and that is away from the connector head 1. The mounting cover 4 may be a tail cover of the connector body 01. The mounting wall 42 is formed in the mounting cover 4. In other words, the cable mounting hole 41 is formed in the mounting cover 4. The cable mounting hole 41 passes through two sides of the mounting cover 4. The mounting cover 4 is detachably connected to the cable duct 2 (for example, detachably connected or clamped by using a bolt or a screw).

In a process of mounting the cable 5, the cable 5 may be first connected to a structure in the connector head 1 or the cable duct 2, and then the mounting cover 4 is mounted on the cable duct 2; or the cable 5 may be first mounted in the mounting cover 4, and then the cable 5 and the mounting cover 4 are mounted. A specific assembly sequence of the charging connector 110 is not limited in this application. In this application, the cable duct 2 and the mounting cover 4 are designed separately, so that assembly of the charging connector 110 is more convenient.

Refer to FIG. 4. In an example in which the mounting wall 42 includes the first wall body 421, the second wall body 422, and the third wall body 423, the first wall body 421, the second wall body 422, and the third wall body 423 are all formed in the mounting cover 4.

In another example, the mounting wall 42 may be integrated with the grip 3 and the cable duct 2. In this example, the mounting wall 42 is a tail wall of the connector body 01.

Refer to FIG. 3 and FIG. 4. In an example in which the charging connector 110 includes the mounting cover 4, a grip channel 32 may be formed in the grip 3. The internal channel of the cable duct 2 communicates with the grip channel 32, so that internal space of the charging connector 110 is larger. This facilitates mounting of the cable 5 and mounting of a component located inside the connector body 01 in the charging connector 110, and further improves the production efficiency of the charging connector 110. The mounting cover 4 covers the internal channel of the cable duct 2 and the grip channel 32, to protect the internal structure of the connector body 01.

Refer to FIG. 3 and FIG. 4. For example, both an end part that is of the grip 3 and that is close to the connector head 1 and an end part that is of the grip 3 and that is away from the connector head 1 communicate with the cable duct 2. An end part that is of the cable duct 2 and that is away from the connector head 1 and the end part that is of the grip 3 and that is away from the connector head 1 are connected and enclosed to form a connection port 21. The mounting cover 4 is disposed at the connection port 21. An end that is of the grip channel 32 and that is away from the connector head 1 and an end that is of the internal channel of the cable duct 2 and that is away from the connector head 1 are both the connection port 21. For example, the connection port 21 extends from the bottom of the cable duct 2 (the bottom in FIG. 4) to the top of the cable duct 2 (the top in FIG. 4), so that an area of the connection port 21 is large. This facilitates mounting of a component located in the connector body 01 in the cable duct 2, and further improves the production efficiency of the charging connector 110. After the mounting cover 4 is detached, it is also convenient to maintain the internal structure of the connector body 01.

A specific structure of the mounting cover 4 may be determined based on production and design requirements. Refer to FIG. 4. For example, the mounting cover 4 may be of a cover structure. The mounting cover 4 has a radian, and the mounting cover 4 protrudes toward a side away from the connector head 1. In another example, the mounting cover 4 may alternatively be of a plate structure or a housing structure, provided that the mounting cover 4 can block the connection port 21. A structure of the mounting cover 4 is not specifically limited in this application.

To relieve strain of the cable 5, a strain relief structure 43 (Strain Relief, SR), for example, a cable tie, may be further disposed between the cable 5 and a wall surface that is of the mounting cover 4 and that is enclosed to form the cable mounting hole 41. The strain relief structure 43 can relieve the strain of the cable 5, to prevent a core cable of the cable 5 from being broken at the cable mounting hole 41. For example, a material of the strain relief structure 43 may be rubber. In another example, the material of the strain relief structure 43 may alternatively be polyvinyl chloride (Polyvinyl Chloride, PVC) or the like. The strain relief structures 43 of different materials have different strength, and may be used in different cables 5. This is not specifically limited in this application. In addition, a plurality of notches may be provided on the strain relief structure 43, so that the strain relief structure 43 can be bent in different directions.

The cable duct 2 in this application has a plurality of implementable structures. Refer to FIG. 3 and FIG. 4. In an example, the cable duct 2 may include a first part 22 and a second part 23. The first part 22 is connected to and communicates with the second part 23. The connector head 1 is disposed at an end part that is of the second part 23 and that is away from the first part 22. The cable mounting hole 41 is a through hole. The first part 22 extends in an axis direction of the cable mounting hole 41. An extension direction of the second part 23 intersects with an extension direction of the first part 22. For example, the extension direction of the second part 23 is perpendicular to the extension direction of the first part 22. For another example, the extension direction of the second part 23 only intersects with but is not perpendicular to the extension direction of the first part 22. This is not specifically limited in this application.

There is an included angle between the extension direction of the first part 22 and the extension direction of the second part 23, so that the cable duct 2 is of a bending structure, and the connector body 01 is quickly connected to a specified position (for example, a power socket of the electric apparatus or an interface on the charging pile). In this way, a charging operation is more convenient and user-friendly, and use experience of the operator is improved.

Refer to FIG. 3 and FIG. 4. In the foregoing example, the grip 3 may also extend in the axis direction of the cable mounting hole 41, so that the holding space 31 extends in the axis direction of the cable mounting hole 41.

In another example, the cable duct 2 may not be configured as a bending structure. In other words, the entire cable duct 2 extends in a same direction. The connector head 1 and the cable mounting hole 41 are respectively disposed at two ends of the cable duct 2 in a length direction. The grip 3 is disposed between the connector head 1 and the cable mounting hole 41.

Refer to FIG. 6. In some other embodiments, FIG. 6 shows an example of a structure of another charging connector 110. A boss 44 is formed in the mounting cover 4. The boss 44 protrudes toward a direction away from the connector head 1. The cable mounting hole 41 is provided at an end part that is of the boss 44 and that is away from the connector head 1.

In some other embodiments, an extension tube is formed in the mounting cover 4. The extension tube extends toward the direction away from the connector head 1. Space communicating with the cable duct 2 is formed in the extension tube. The cable mounting hole 41 is provided at an end part that is of the extension tube and that is away from the connector head 1.

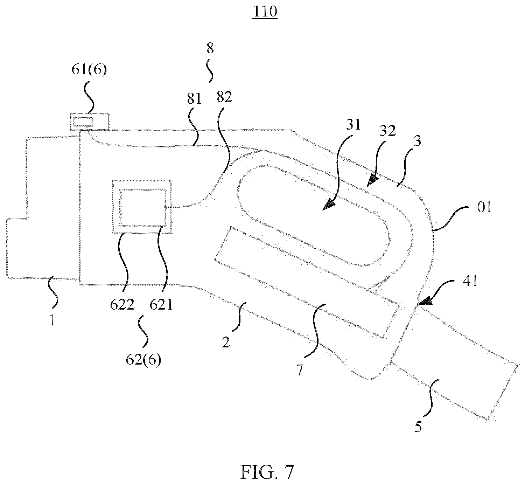

Refer to FIG. 7. In addition, FIG. 7 shows an example of a structure of another charging connector 110. The connector body 01 of the charging connector 110 may further include a light-emitting device 6. The light-emitting device 6 can emit light after being powered on.

In an embodiment, the light-emitting device 6 may include a lamp 61. Refer to FIG. 7. For example, the lamp 61 may be mounted at an end part that is of the cable duct 2 and that is away from the cable mounting hole 41. In another example, the lamp 61 may alternatively be mounted on the connector head 1 (for example, an end part that is of the connector head 1 and that is away from the cable mounting hole 41).

There may be a plurality of mounting manners of the lamp 61. In an example, the lamp 61 may be disposed outside the connector body 01 (the connector head 1 or the cable duct 2), and the lamp 61 is connected to the connector body 01 through a connection structure (for example, a connection bracket). In another example, the lamp 61 may be partially embedded in the connector body 01, provided that light of the lamp 61 can be irradiated from the connector body 01. In addition, the lamp 61 may be disposed in any direction of the connector body 01, for example, above, below, or on a side of the connector body 01. A mounting manner and a mounting direction of the lamp 61 are not specifically limited in this application.

The lamp 61 is disposed on the charging connector 110. In a process in which the operator connects the connector body 01 to a predetermined position, the lamp 61 may play an illumination role, so that the operator connects the charging connector 110 to the predetermined position more easily at night or at a dark place. This facilitates a charging connection. In this way, the charging connector 110 in this application is more user-friendly, and user experience is further improved.

Refer to FIG. 7. In the foregoing embodiment, the light-emitting device 6 may further include a light-emitting identification part 62. In other words, the lamp 61 and the light-emitting identification part 62 are both disposed on the connector body 01. The light-emitting identification part 62 may be disposed at any suitable position on the connector body 01 based on a requirement. For example, the light-emitting identification part 62 may be disposed on the cable duct 2. In another example, the light-emitting identification part 62 may alternatively be disposed on the connector head 1. This is not specifically limited in this application.

It should be noted that the light-emitting identification part 62 in this application may be any structure that can emit light and is used for identification. For example, the light-emitting identification part 62 may be a logo (Logo) or a trademark, the light-emitting identification part 62 may be an identification or warning pattern, or the light-emitting identification part 62 may be a prompt or guidance text. The identification part that can emit light is used, so that an identification that needs to be seen by the operator is clearer, to offer displaying, prompting, warning, or guidance.

For a structure of the light-emitting identification part 62, refer to FIG. 7. For example, the light-emitting identification part 62 may include a light-emitting part 621 and a light transmission housing 622. The light-emitting part 621 may be any device that can emit light after being powered on. For example, the light-emitting part 621 may be a light-emitting diode (Light-Emitting Diode, LED), a light bulb, or the like. The light-emitting part 621 may be disposed on the cable duct 2. The light transmission housing 622 is covered outside the light-emitting part 621. A pattern or a text for identification is disposed on the light transmission housing 622. In another example, a shape of the light transmission housing 622 may be a shape of an identification pattern, or a shape of the light transmission housing 622 may be a shape of an identification text.

In another embodiment, the light-emitting device 6 may be only the lamp 61, or the light-emitting device 6 may be only the light-emitting identification part 62.

In another embodiment, the light-emitting device 6 may alternatively be another device that can emit light after being powered on.

Refer to FIG. 7. To enable the light-emitting device 6 to emit light normally, for example, the charging connector 110 may further include a photovoltaic module. The photovoltaic module includes a photovoltaic cell 7 and a connection wire 8. The photovoltaic cell 7 is disposed on the cable duct 2. At least a part of the photovoltaic cell 7 is located outside the cable duct 2. The photovoltaic cell 7 is electrically connected to the light-emitting device 6 through the connection wire 8. The photovoltaic module may perform photoelectric conversion, and convert solar radiation energy into electric energy through photovoltaic effect of the photovoltaic cell 7. In this process, photons transfer energy to electrons, so that the electrons move, to form a current.

The photovoltaic cell 7 is electrically connected to the light-emitting device 6 through the connection wire 8, to supply power to the light-emitting device 6. In an environment with light, the photovoltaic cell 7 receives light and runs normally. The photovoltaic cell 7 is disposed to supply power to the light-emitting device 6, and light energy is used, so that the light-emitting device 6 can normally emit light when being used. This saves energy, and no additional power supply needs to be disposed to supply power to the light-emitting device 6.

In some embodiments, the photovoltaic module may further include a junction box. The junction box is disposed on the photovoltaic cell 7. The connection wire 8 is connected to the junction box. The junction box may be disposed in the cable duct 2.

In some embodiments, the charging connector 110 may further include an energy storage structure, which may store electric energy converted by the photovoltaic module, and supply power to the light-emitting device 6 when required.

In this application, at least a part of the photovoltaic cell 7 is disposed outside the connector body 01. In an example, the photovoltaic cell 7 is disposed outside the cable duct 2. In this example, the photovoltaic cell 7 may be mounted on the connector body 01 by using a mounting structure (for example, a mounting bracket or structural adhesive). In addition, the cable duct 2 may further be provided with a hole for the connection wire 8 to pass through. One end of the connection wire 8 is electrically connected to the photovoltaic cell 7, and the other end passes through an outer wall of the cable duct 2 and extends into the cable duct 2.

In another example, a part of the photovoltaic cell 7 is located in the cable duct 2, and the other part (a part having the photovoltaic effect) is located outside the cable duct 2. The part that is of the photovoltaic cell 7 and that is located outside the cable duct 2 can be in full contact with light.

A position of the photovoltaic cell 7 may be determined based on a design requirement. For example, the photovoltaic cell 7 may be disposed in any direction of the cable duct 2, for example, above, below, or on a side of the cable duct 2 (FIG. 7 shows an example in which the photovoltaic cell 7 is disposed on the side of the cable duct 2). A mounting manner and a mounting direction of the photovoltaic cell 7 are not specifically limited in this application.

Refer to FIG. 7. Because an outer surface of the cable duct 2 is uneven, to enable the photovoltaic cell 7 to be better connected to the cable duct 2, the photovoltaic cell 7 may include a thin-film photovoltaic cell. The thin-film photovoltaic cell is connected (for example, bonded by using bonding adhesive or fastened by using a fastening bracket) to the outer surface of the cable duct 2. The thin-film photovoltaic cell is flexible, and can be curved or bent based on a shape of the outer surface of the cable duct 2, so that a degree of fitting between the photovoltaic cell 7 and the outer surface of the cable duct 2 is higher. This facilitates mounting of the photovoltaic cell 7, and can also make the charging connector 110 more beautiful.

In another example, the photovoltaic cell 7 may include a photovoltaic panel. In this example, a fastening port may be provided on the cable duct 2. The photovoltaic panel is mounted in the fastening port. A wall surface that is of the cable duct 2 and that is enclosed to form the fastening port is fastened to a peripheral wall of the photovoltaic panel.

To enable the photovoltaic cell 7 to supply power to the light-emitting device 6, the photovoltaic cell 7 needs to be electrically connected to the light-emitting device 6 through the connection wire 8. Refer to FIG. 7. In an example, a part of the connection wire 8 may be disposed in the grip channel 32. For example, the connection wire 8 may pass through the grip channel 32 and be connected to the light-emitting device 6, and a part of the connection wire 8 is disposed in the grip channel 32, so that space in the grip channel 32 is fully utilized. This facilitates placement of the connection wire 8, reduces impact of the connection wire 8 on a component in the cable duct 2, and also reduces a possibility that the connection wire 8 and the cable 5 interfere with each other.

In another example, both the photovoltaic cell 7 and the light-emitting device 6 are disposed around the grip channel 32, and the entire connection wire 8 may be disposed in the grip channel 32.

Refer to FIG. 7. In an example in which the light-emitting device 6 includes the lamp 61 and the light-emitting identification part 62, the connection wire 8 may include a first connection wire 81 and a second connection wire 82. The lamp 61 is electrically connected to the photovoltaic cell 7 through the first connection wire 81. The light-emitting identification part 62 is electrically connected to the photovoltaic cell 7 through the second connection wire 82. In an example, at least a part of the first connection wire 81 is disposed in the grip channel 32, and at least a part of the second connection wire 82 is disposed in the grip channel 32. For example, after passing through the grip channel 32, the first connection wire 81 and the second connection wire 82 are respectively connected to the lamp 61 and the light-emitting identification part 62.

In addition, outer sides of the first connection wire 81 and the second connection wire 82 may be wrapped with a sheath, and the sheath protects the first connection wire 81 and the second connection wire 82. To facilitate mounting of the first connection wire 81 and the second connection wire 82, a section of the sheath needs to be stripped off, so that the first connection wire 81 and the second connection wire 82 extend out of the sheath.

In another example, only the first connection wire 81 may pass through the grip channel 32 and be connected to the lamp 61, and the second connection wire 82 may be connected to the light-emitting identification part 62 through the cable duct 2. Alternatively, only the second connection wire 82 may pass through the grip channel 32 and be connected to the light-emitting identification part 62, and the first connection wire 81 may be connected to the lamp 61 through the cable duct 2.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A charging connector, comprising:
a connector head;
a cable duct, wherein the connector head is disposed at an end part of the cable duct;
a grip, wherein the grip is connected to the cable duct, and the grip and the cable duct are enclosed to form holding space; and
a cable mounting hole, wherein the cable mounting hole communicates with the cable duct, the cable mounting hole is located on a side that is of the grip and that is away from the connector head, and the cable mounting hole is configured for a cable to extend into the cable duct.

2. The charging connector according to claim 1, wherein the cable mounting hole is provided close to the cable duct.

3. The charging connector according to claim 1, wherein the charging connector further comprises a mounting cover, the mounting cover is disposed on a side that is of the cable duct and that is away from the connector head, the mounting cover is detachably connected to the cable duct, and the cable mounting hole is formed in the mounting cover.

4. The charging connector according to claim 3, wherein a grip channel is formed in the grip, an internal channel of the cable duct communicates with the grip channel, and the mounting cover covers the internal channel of the cable duct and the grip channel.

5. The charging connector according to any one of claims 1 to 4, wherein the charging connector further comprises a cooling structure configured to cool a terminal, the cooling structure is disposed in the cable duct, the cable comprises a protective sleeve and a liquid cooling pipe, the liquid cooling pipe is disposed in the protective sleeve, and an end part of the liquid cooling pipe extends out of the protective sleeve and is connected to the cooling structure.

6. The charging connector according to any one of claims 1 to 4, wherein the charging connector further comprises:
a light-emitting device, wherein the light-emitting device is disposed on the cable duct or the connector head; and
a photovoltaic cell, wherein the photovoltaic cell is connected to the cable duct and at least partially located outside the cable duct, and the photovoltaic cell is electrically connected to the light-emitting device through a connection wire.

7. The charging connector according to claim 6, wherein the grip channel is formed in the grip, and at least a part of the connection wire is located inside the grip channel.

8. The charging connector according to claim 6, wherein the light-emitting device comprises a lamp, and the lamp is disposed at an end part that is of the cable duct and that is away from the cable mounting hole, or the lamp is disposed at the connector head.

9. A charging connector, comprising a first connector body, a second connector body, and a cable, wherein two ends of the cable are respectively connected to the first connector body and the second connector body, and either of the first connector body and the second connector body comprises:
a connector head;
a cable duct, wherein the connector head is disposed at an end part of the cable duct;
a grip, wherein the grip is connected to the cable duct; and
a cable mounting hole, wherein the cable mounting hole communicates with the cable duct, the cable mounting hole is located on a side that is of the grip and that is away from the connector head, and the cable mounting hole is configured for an end part of the cable to extend into the cable duct.

10. A charging device, comprising a power module and the charging connector according to any one of claims 1 to 9, wherein the charging connector is electrically connected to the power module.
